# EUROPÄISCHE PATENTSCHRIFT

(11) **EP 3 042 819 B1**
(45) Veröffentlichungstag und Bekanntmachung des Hinweises auf die Patenterteilung: **20.03.2019**
(21) Anmeldenummer: 15194201.8
(22) Anmeldetag: 12.11.2015
(51) Int. Cl.: B60W 30/12, B60W 50/16, B60K 26/02, B62D 15/02

(54) **FAHRERASSISTENZ-SYSTEM UND VERFAHREN ZUM ASSISTIERTEN FÜHREN EINES FAHRZEUGS**
DRIVER ASSISTANCE SYSTEM AND METHOD FOR ASSISTED DRIVING OF A VEHICLE
SYSTEME D'ASSISTANCE A LA CONDUITE ET PROCEDE DE GUIDAGE ASSISTE D'UN VEHICULE

(30) Priorität: 05.01.2015 DE 102015200025
(43) Veröffentlichungstag der Anmeldung: 13.07.2016
(73) Patentinhaber: Robert Bosch GmbH, 70442 Stuttgart (DE)
(72) Erfinder: DAROCZI, Gabor Balazs, 1138 Budapest (HU); HALASZ, MIKLOS, 1094 Budapest (HU)

(56) Entgegenhaltungen:
- EP-A2- 1 400 435
- DE-A1-102008 061 302
- US-A1- 2005 065 687
- US-A1- 2008 270 519

## Beschreibung

Die vorliegende Erfindung betrifft ein Fahrerassistenz-System und ein Verfahren zum assistierten Führen eines Fahrzeugs. Unter einem Fahrzeug soll insbesondere ein Straßenfahrzeug, ein Schienenfahrzeug, ein Wasserfahrzeug oder ein Luftfahrzeug verstanden sein, welche jeweils beispielsweise durch Verbrennungsmotoren, Elektromotoren, Hybridmotoren oder andere Motoren angetrieben sein können. Besonders bevorzugt betrifft die Erfindung ein Straßenfahrzeug.

### Stand der Technik

Übliche Fahrerassistenz-Systeme realisieren einfache Funktionen basierend auf Beobachtungen des Umfelds eines Fahrzeugs. Solche Systeme können einen Fahrzeugführer des Fahrzeugs, welcher im Folgenden als "Fahrer" bezeichnet wird, beispielsweise warnen, falls das Fahrzeug im Begriff ist, unabsichtlich eine Fahrzeugspur zu verlassen oder wenn eine Kollision wahrscheinlich wird.

In der US 5 067 576 A ist ein Steuersystem mit variabler Anstrengung für einen Benutzer beschrieben, wobei ein Drehmoment auf eine Lenkachse des Fahrzeugs ausgeübt wird, welches einem manuell, beispielsweise durch einen Nutzer, auf die Lenkachse aufgebrachten Drehmoment entgegengerichtet ist. Das Drehmoment wird beispielsweise derart ausgeübt, dass im Bereich niedriger Geschwindigkeiten des Fahrzeugs die Lenkachse für den Nutzer verhältnismäßig leicht drehbar ist und im Bereich hoher Geschwindigkeiten das Lenkrad verhältnismäßig schwer drehbar ist.

In der EP 1 400 435 A1 ist ein Fahrzeug-Fahr-Assistenz-System beschrieben, in welchem ein Fahrzustand eines Fahrzeugs sowie eine Umgebung des Fahrzeugs erfasst werden und darauf basierend eine Reaktionskraft einer Fahrzeug-Bedienvorrichtung angepasst wird.

In der DE 10 2008 061 302 A1 ist ein Routenführungsassistenz-System beschrieben, wobei eine Steuereinheit dem Fahrer eine haptische Rückmeldung ausgeben kann, beispielsweise auf die Lenkung des Fahrzeugs.

In der US 2005/065687 A1 ist ein Fahrerassistenzsystem beschrieben, welches ein Risikopotential für ein Fahrzeug berechnet und darauf basierend eine Reaktionskraft eines Beschleunigungspedals des Fahrzeugs steuert.

In der US 2008/270519 A1 sind Verfahren und Systeme zum Verteilen von Fahrzeug-Reiseinformationen beschrieben. Zudem wird darin ein System beschrieben, wonach ein Widerstand eines Beschleunigungspedals eines Fahrzeugs erhöht wird, wenn der Fahrer schneller als eine aktuelle Geschwindigkeitsbegrenzung zu fahren beabsichtigt.

### Offenbarung der Erfindung

Die vorliegende Erfindung offenbart ein Fahrerassistenz-System mit den Merkmalen des Patentanspruchs 1 und ein Verfahren mit den Merkmalen des Patentanspruchs 7.

Unter einer Verkehrssituation soll beispielsweise eine Anordnung von Fahrspuren einer Straße, auf welcher sich das Fahrzeug aktuell befindet, ein oder mehrere Abstände des Fahrzeugs zu anderen Verkehrsteilnehmern in dem Umfeld des Fahrzeugs, beispielsweise weiteren Fahrzeugen, Fußgängern etc., eine aktuelle Anweisung eines Navigationssystems des Fahrzeugs, eine Lage eines oder mehrerer Hindernisse in der Umgebung des Fahrzeugs usw. verstanden werden. Insbesondere soll eine externe Verkehrssituation erfasst werden, d.h. eine Verkehrssituation, welche von internen Zuständen des Fahrzeugs unabhängig ist. Die Recheneinrichtung kann als ein Computer oder Mikrocomputer ausgebildet sein, welche dazu ausgebildet ist, eine Software auszuführen, welche dazu geeignet ist, das erfindungsgemäße Verfahren durchzuführen.

Ein Radius eines Bereichs um das Fahrzeug, welcher als Umgebung des Fahrzeugs definiert wird, kann in Abhängigkeit von einer aktuellen Geschwindigkeit des Fahrzeugs anpassbar sein, wobei vergleichsweise höhere Geschwindigkeiten vergleichsweise größere Umgebungen des Fahrzeugs zur Folge haben, in welchen die Verkehrssituation erfasst wird.

Der erste Widerstand, welcher erzeugt oder erhöht wird, kann beispielsweise ein passiver Widerstand sein, welcher die erfasste Bewegung der Eingabeeinrichtung erschwert, und kann insbesondere ein mechanischer Widerstand sein, welcher durch eine Bremseinrichtung als Aktor, etwa eine Scheibenbremse oder eine Wirbelstrombremse, erzeugt oder erhöht wird. Der Widerstand kann auch als eine aktiv gegen die Bewegung der Eingabeeinrichtung gerichtete Kraft oder als ein aktiv gegen die Bewegung der Eingabeeinrichtung gerichtetes Drehmoment ausgebildet sein.

Unter einer der erfassten Bewegung entgegengesetzten Bewegung soll insbesondere eine Bewegung verstanden werden, welche dazu geeignet ist, ein Ergebnis der erfassten Bewegung rückgängig zu machen. Ist die Bewegung eine lineare oder eindimensionale Bewegung, ist unter der entgegengesetzten Bewegung eine Bewegung entlang desselben Pfades, aber in entgegengesetzter Richtung zu verstehen; beispielsweise ist die einem Niederdrücken eines Beschleunigungspedals entgegengesetzte Bewegung ein Wiederanheben des Beschleunigungspedals, beispielsweise aufgrund einer Federkraft. Bei einer Rotationsbewegung als erfasste Bewegung ist unter der entgegengesetzten Bewegung eine Rotation um die gleiche Achse, aber im umgekehrten Drehsinn zu verstehen; beispielsweise wäre die Bewegung, welche einem Auslenken eines Lenkrads nach links als erfasste Bewegung entgegengesetzt ist, ein Auslenken des Lenkrads nach rechts. Der zweite Widerstand kann beispielsweise dadurch verringert werden, dass eine unterstützende Kraft oder ein unterstützendes Drehmoment erzeugt wird, welches die der erfassten Bewegung entgegengesetzte Bewegung unterstützt.

### Vorteile der Erfindung

Die der vorliegenden Erfindung zugrunde liegende Erkenntnis besteht darin, dass es vorteilhaft ist, wenn Fahrer einen erhöhten Aufwand aufbringen müssen, um eine Eingabeeinrichtung eines Fahrzeugs in einer Weise zu betätigen, welche durch das Steuerprogramm der Recheneinrichtung als nachteilhaft eingestuft wird. Der Fahrer ist jederzeit in der Lage, das Fahrzeug in der gewünschten Weise zu steuern, das heißt das Fahrerassistenz-System zu übersteuern, muss jedoch dafür einen erhöhten Aufwand, insbesondere eine erhöhte körperliche Anstrengung, in Kauf nehmen. Dadurch erhält der Fahrer eine unmittelbare Rückmeldung über die Bewertung seines Fahrzeugführens. Gleichzeitig wird erreicht, dass ein als besonders vorteilhaft eingestuftes Fahrzeugführen auf Dauer eine angenehmere Fahrerfahrung mit sich bringt.

Das Steuerprogramm des erfindungsgemäßen Fahrerassistenz-Systems umfasst Steuerregeln, welche einer, mehreren oder allen an einer aktuellen Position des Fahrzeugs geltenden gesetzlichen Verkehrsregeln entsprechen. Verhält sich der Fahrer gemäß allen Steuerregeln, kann das erfindungsgemäße System und/oder das erfindungsgemäße Verfahren für den Fahrer unmerklich sein. Die Steuerregeln können beispielsweise durch das erfindungsgemäße System automatisch von einem Server empfangen oder von einem Server, etwa über das Internet, heruntergeladen werden. Das Empfangen oder das Herunterladen kann automatisch regelmäßig oder kontinuierlich erfolgen. Es können auch, zusätzlich oder alternativ, genau dann Steuerregeln von dem Server angefordert und/oder heruntergeladen werden, wenn das Fahrzeug in einen Bereich eintritt, in welchem andere gesetzliche Verkehrsregeln gelten als außerhalb des Bereichs. Somit kann automatisch die Fähigkeit des Fahrers trainiert werden, lokale Verkehrsregeln zu befolgen.

Optional wird immer wenn der erste Widerstand erzeugt oder erhöht wird, oder wenn der Widerstandswert, mit welchem der erste Widerstand erzeugt oder auf welchen der erste Widerstand erhöht wird, einen vorgegebenen Schwellwert überschreitet, zusätzlich ein Warnsignal an den Fahrer ausgegeben. Das Warnsignal kann optisch, akustisch oder haptisch ausgebildet sein. Das Warnsignal kann eine Vibration, beispielsweise einer Eingabeeinrichtung wie eines Beschleunigungspedals oder eines Lenkrads, mittels eines Kraftrückkopplungsaktors umfassen.

Vorteilhafte Ausführungsformen und Weiterbildungen ergeben sich aus den Unteransprüchen sowie aus der Beschreibung unter Bezugnahme auf die Figuren.

Erfindungsgemäß ist die Recheneinrichtung dazu ausgebildet, das Steuersignal zumindest dann zu erzeugen, wenn durch die Recheneinrichtung, basierend auf der erfassten Verkehrssituation, festgestellt wird, dass aufgrund der erfassten Bewegung der Eingabeeinrichtung ein Bruch einer in dem Steuerprogramm gespeicherten Steuerregel bevorsteht oder erfolgt. Beispielsweise kann das Steuersignal erzeugt werden, wenn die Verkehrs-Erfassungseinrichtung das Vorhandensein einer roten Ampel erfasst und über die zweite Schnittstelle an die Recheneinrichtung gemeldet hat und wenn die Eingabe-Erfassungseinrichtung ein Gleichbleiben oder ein Erhöhen des Grades, zu welchem ein Beschleunigungspedal des Fahrzeugs niedergedrückt ist, erfasst und an die Recheneinrichtung über die erste Schnittstelle übermittelt hat. In diesem Fall kann ein Widerstand, beispielsweise eine Gegenkraft oder ein Gegen-Drehmoment gegen ein weiteres Niederdrücken des Beschleunigungspedals nach Maßgabe des Steuersignals erzeugt werden.
Gemäß einer weiteren Ausführungsform umfasst das System mindestens eine an der ersten Schnittstelle angeschlossene Eingabe-Erfassungseinrichtung, mittels welcher eine Bewegung der mindestens einen Eingabeeinrichtung des Fahrzeugs erfassbar ist. Bei der Eingabe-Erfassungseinrichtung kann es sich beispielsweise um einen Aktor, um ein optisches Erfassungssystem, um einen Auslenkungssensor, einen Drucksensor, einen Lagesensor etc. handeln. Gemäß einer weiteren Ausführungsform umfasst das System eine an der zweiten Schnittstelle angeschlossene Verkehrs-Erfassungseinrichtung, mittels welcher eine Verkehrssituation in einer Umgebung des Fahrzeugs erfassbar ist.

Gemäß einer weiteren Ausführungsform umfasst das System mindestens einen an der dritten Schnittstelle angeschlossenen Aktor, mittels dessen basierend auf dem erzeugten Steuersignal der erste Widerstand gegen die mittels der Eingabe-Erfassungseinrichtung erfasste Bewegung der mindestens einen Eingabeeinrichtung erzeugbar oder erhöhbar ist. Der Aktor kann gleichzeitig als Eingabe-Erfassungseinrichtung fungieren. Bei dem Aktor kann es sich beispielsweise um einen elektrischen Motor oder eine mechanische oder elektrische Bremseinrichtung handeln. Der Aktor kann zudem zum Erniedrigen des zweiten Widerstands ausgebildet sein. Alternativ oder zusätzlich kann das System auch einen weiteren, an der dritten Schnittstelle oder einer weiteren Schnittstelle angeschlossenen Aktor aufweisen, welcher dazu geeignet ist, den zweiten Widerstand zu nach Maßgabe des Steuersignals zu erniedrigen.

Erfindungsgemäß ist mittels des Aktors ein Drehmoment erzeugbar, welches einem Drehen eines Lenkrads als Eingabeeinrichtung in mindestens eine Richtung entgegenwirkt, wobei der Widerstandswert, mit welchem der erste Widerstand erzeugt oder auf welchen der erste Widerstand erhöht wird, proportional zu einer Abweichung einer aktuellen Auslenkung des Lenkrads aus einer, Maßgabe des Steuerprogramms, basierend auf der erfassten Verkehrssituation, berechneten Soll-Auslenkung des Lenkrads ist. Die Soll-Auslenkung des Lenkrads kann insbesondere eine solche Auslenkung des Lenkrads sein, welche das Fahrzeug entlang einer aktuellen Spur des Fahrzeugs führt. Das heißt, bewegt sich das Fahrzeug auf einer geraden Strecke, ist die Soll-Auslenkung des Lenkrads beispielsweise gleich Null, fährt das Fahrzeug aktuell entlang einer Kurve, ist die Soll-Auslenkung des Lenkrads aktuell in Richtung der Kurvenkrümmung festgelegt. Lenkt der Fahrer beispielsweise das Lenkrad nach rechts aus, um in eine Einbahnstraße einzufahren statt, wie lediglich erlaubt, geradeaus zu fahren, wäre jegliche Auslenkung des Lenkrads eine Abweichung aus der berechneten Soll-Auslenkung des Lenkrads. Statt proportional zu der Abweichung kann der Wert auch exponentiell, polynumial oder sonst wie stetig mit der Abweichung wachsen.

Gemäß einer weiteren Ausführungsform weist das System einen Kraftrückkopplungsaktor (Englisch: "force feedback actuator") auf, welcher mittels des erzeugten Steuersignals zum Ausgeben eines haptischen Signals an der Eingabeeinrichtung ansteuerbar ist. Mittels des Kraftrückkopplungsaktors kann beispielsweise eine Vibration der Eingabeeinrichtung, beispielsweise des Beschleunigungspedals oder des Lenkrads oder eines Steuerhebels, erzeugt werden. Dadurch kann dem Fahrer in einem Warnsignal angezeigt werden, dass derzeit ein Steuersignal ausgegeben wird, welches die erfasste Bewegung der Eingabeeinrichtung erschwert.

Das erfindungsgemäße System kann insbesondere in einem Fahrzeug oder als ein Fahrzeug ausgebildet sein.

### Kurze Beschreibung der Zeichnungen

Die vorliegende Erfindung wird nachfolgend anhand der in den schematischen Figuren der Zeichnungen dargestellten Ausführungsbeispiele näher erläutert. Es zeigen:
Fig. 1 ein schematisches Blockschaltbild eines beispielhaften Fahrerassistenz-Systems 10;
Fig. 2 ein schematisches Blockschaltbild eines weiteren beispielhaften Fahrerassistenz-Systems 110;
Fig. 3 ein schematisches Blockschaltbild eines Fahrerassistenz-Systems 210 gemäß einer ersten Ausführungsform der vorliegenden Erfindung;
Fig. 4 ein schematisches Blockschaltbild eines Fahrerassistenz-Systems 310 gemäß einer zweiten Ausführungsform der vorliegenden Erfindung; und
Fig. 5 ein schematisches Flussdiagramm zum Erläutern eines Verfahrens gemäß einer dritten Ausführungsform der vorliegenden Erfindung.

In allen Figuren sind gleiche bzw. funktionsgleiche Elemente und Vorrichtungen - sofern nichts anderes angegeben ist - mit denselben Bezugszeichen versehen.

### Beschreibung der Ausführungsbeispiele

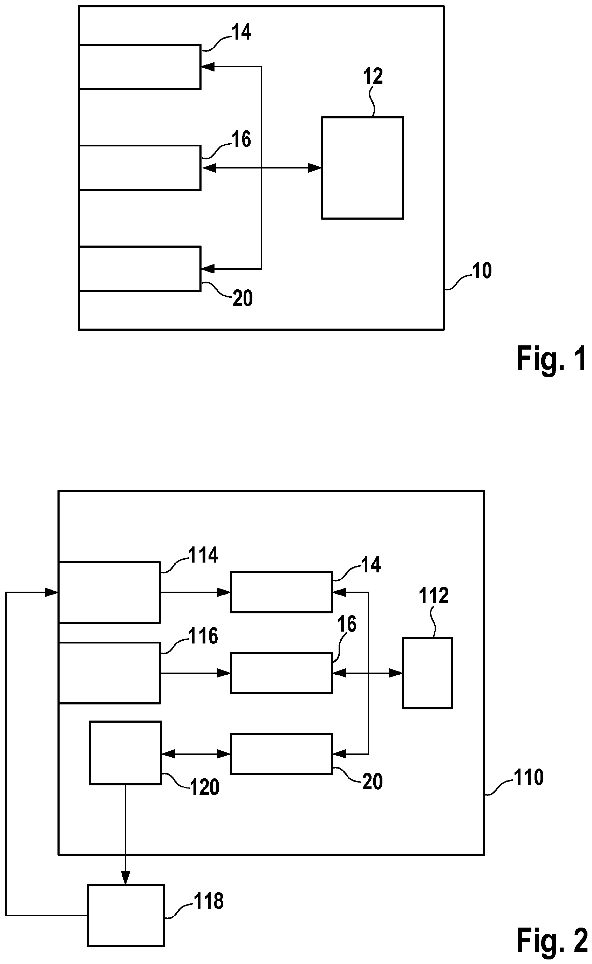

Fig. 1 zeigt ein schematisches Blockschaltbild eines beispielhaften Fahrerassistenz-Systems 10. Das Fahrerassistenz-System 10 weist eine Recheneinrichtung 12 sowie eine erste Schnittstelle 14, eine zweite Schnittstelle 16 und eine dritte Schnittstelle 20 auf. Die erste Schnittstelle 14 ist zum Anschließen mindestens einer Eingabe-Erfassungseinrichtung des Fahrzeugs 1 ausgebildet. Dementsprechend sind Leitungen zwischen der Recheneinrichtung 12 und der ersten Schnittstelle 14 zum Übertragen von Informationen zumindest von einer angeschlossenen Eingabe-Erfassungseinrichtung an die Recheneinrichtung 12 ausgebildet.

Die zweite Schnittstelle 16 ist zum Anschließen einer Verkehrs-Erfassungseinrichtung des Fahrzeugs an die Recheneinrichtung 12 ausgebildet und weist demnach Signalleitungen zumindest zum Übermitteln von Datensignalen einer angeschlossenen Verkehrs-Erfassungseinrichtung über die zweite Schnittstelle 16 an die Recheneinrichtung 12 auf.

Die dritte Schnittstelle 20 ist zum Anschließen mindestens eines Aktors an die Recheneinrichtung 12 ausgebildet. Die Recheneinrichtung 12 ist dazu ausgebildet, basierend auf einer von der mindestens einen Eingabe-Erfassungseinrichtung erfassten Bewegung mindestens einer Eingabeeinrichtung des Fahrzeugs, das heißt basierend auf einem ersten Datensignal, welches basierend auf der durch die mindestens eine Eingabe-Erfassungseinrichtung erfassten Bewegung durch die Eingabe-Erfassungseinrichtung erzeugt wird und weiterhin basierend auf einer von der Verkehrs-Erfassungseinrichtung erfassten Verkehrssituation, das heißt basierend auf einem zweiten Datensignal, welches basierend auf der durch die Verkehrs-Erfassungseinrichtung erfassten Verkehrssituation durch die Verkehrs-Erfassungseinrichtung erzeugt wurde, nach Maßgabe eines Steuerprogramms der Recheneinrichtung ein Steuersignal zu erzeugen. Die Recheneinrichtung 12 ist weiterhin dazu ausgebildet, das erzeugte Steuersignal an die dritte Schnittstelle 20 zu übermitteln, so dass es einen an die dritte Schnittstelle 20 angeschlossenen Aktor steuern kann.

Das Steuersignal ist dazu ausgebildet, den mindestens einen Aktor anzusteuern, einen ersten Widerstand gegen die erfasste Bewegung der mindestens einen Eingabeeinrichtung zu erzeugen oder zu erhöhen. Ein Widerstandswert, mit welchem der erste Widerstand erzeugt oder auf den der erste Widerstand erhöht wird, wird von der Recheneinrichtung 12 in Abhängigkeit von der erfassten Verkehrssituation, das heißt basierend auf dem ersten Datensignal, eingestellt. Insbesondere ist die Recheneinrichtung 12 dazu ausgebildet, den Widerstandswert auf einen von mindestens zwei unterschiedlichen endlichen diskreten Werten einzustellen. Alternativ oder zusätzlich kann die Recheneinrichtung auch dazu ausgebildet sein, den Widerstandswert aus einem kontinuierlichen Wertebereich auszuwählen, beispielsweise diesen proportional zu einem Parameter einzustellen. Dieser Parameter kann beispielsweise eine Abweichung eines aktuellen Ist-Werts von einem aktuellen oder konstanten SollWert sein, beispielsweise ein aktueller Differenzwert, um welchen eine aktuelle Geschwindigkeit des Fahrzeugs eine aktuelle Geschwindigkeitsbegrenzung für das Fahrzeug übersteigt, oder ein aktueller Wert einer Abweichung zwischen einer aktuellen Auslenkung des Lenkrads und einer Soll-Auslenkung des Lenkrads.

Die Recheneinrichtung 12 kann eine zentrale oder eine dedizierte Fahrerassistenz-Motorsteuerung (englisch: "engine control unit", ECU) aufweisen oder als eine solche ausgebildet sein.

Fig. 2 zeigt ein schematisches Blockschaltbild eines weiteren beispielhaften Fahrerassistenz-Systems 110. Bei dem Fahrerassistenz-System 110 handelt es sich um eine Variante des Fahrerassistenz-Systems 10, welches diesem gegenüber zusätzlich eine an der ersten Schnittstelle 14 angeschlossene Eingabe-Erfassungseinrichtung 114, eine an der zweiten Schnittstelle 16 angeschlossene Verkehrs-Erfassungseinrichtung 116 sowie einen an der dritten Schnittstelle 20 angeschlossenen Aktor 120 aufweist.

Die Eingabe-Erfassungseinrichtung 114 ist derart ausgebildet, dass mittels ihr eine Bewegung des Lenkrades 118 des Fahrzeugs erfassbar ist. Gemäß des weiteren beispielhaften Fahrerassistenzsystems 110 ist die Eingabeeinrichtung ein Beschleunigungspedal 118, beispielsweise ein Gaspedal eines Fahrzeugs mit Verbrennungsmotor. Die Eingabe-Erfassungseinrichtung 114 misst einen Grad, zu welchem das Beschleunigungspedal 118 niedergedrückt ist. Der Aktor 120 ist dazu ausgebildet, basierend auf dem von der Recheneinrichtung 112 erzeugten und über die dritte Schnittstelle 20 übermittelten Steuersignal einen ersten Widerstand gegen das Niederdrücken des Beschleunigungspedals 118 zu erhöhen. Ein zweiter Widerstand gegen das automatische oder manuelle Wiederanheben des Beschleunigungspedals 118 wird beibehalten; optional wird der zweite Widerstand nach Maßgabe des Steuersignals verringert; dazu kann ein weiterer Aktor vorgesehen sein und angesteuert werden.

Die Verkehrs-Erfassungseinrichtung 116 kann ein Element aus der folgenden Liste aufweisen oder daraus bestehen: einen oder mehrere radarbasierte Sensoren, eine Kurzreichweitenkamera, eine Langreichweitenkamera, eine Mono- und/oder Stereokamera, eine Nachtsichtkamera, einen oder mehrere Ultraschallumgebungssensoren, ein Lidar, einen Laserscanner, einen Reifendrucksensor. Die Verkehrs-Erfassungseinrichtung 116 kann außerdem eine Kommunikationseinrichtung aufweisen oder aus einer Kommunikationseinrichtung bestehen, welche als Teil der aktuellen Verkehrssituation Navigationsdaten, Steuerregeln, Fahrzeug-zu-Fahrzeug-Kommunikation ("car2car") oder andere Datensignale, beispielsweise über das Internet oder über ein Fahrzeug-Ad-hoc-Netzwerk ("car2car", "car2X"), empfangen und/oder anfordern kann. Beispielsweise könnte eine aktuelle Geschwindigkeitsbegrenzung, welche für das Fahrzeug gilt, entweder durch visuelles Erfassen von Geschwindigkeitsbegrenzungsschildern neben der Fahrspur des Fahrzeugs oder durch Ermitteln einer Position des Fahrzeugs, beispielsweise über GPS, und Vergleichen der ermittelten Position mit einer Online- oder Offline-abgelegten Straßenkarte mit gespeicherten Geschwindigkeitsbegrenzungen für alle Straßenabschnitte erfasst werden oder beides.

Die Recheneinrichtung 112 kann eine weitere Kommunikationseinrichtung aufweisen oder auf dieselbe Kommunikationseinrichtung zugreifen wie die Verkehrs-Erfassungseinrichtung 116, beispielsweise um ressourcenaufwändige Berechnungen in der Cloud, d.h. auf einem entfernten Server, durchführen zu lassen.

Gemäß des weiteren beispielhaften Systems ist die Recheneinrichtung dazu ausgebildet, einen ersten Widerstandswert eines ersten Widerstands gegen das erfasste Niederdrücken des Beschleunigungspedals 118 zu erzeugen, welcher proportional zu einem aktuellen ersten Differenzwert ist, um welchen die aktuelle Geschwindigkeit des Fahrzeugs die aktuelle Geschwindigkeitsbegrenzung für das Fahrzeug überschreitet. Weiterhin ist die Recheneinrichtung 112 dazu ausgebildet, einen zweiten Widerstandswert, mit welchem ein dritter Widerstand erzeugt werden soll, proportional zu einem aktuellen zweiten Differenzwert, um welchen die aktuelle Geschwindigkeit des Fahrzeugs eine aktuelle Soll-Geschwindigkeit des Fahrzeugs überschreitet. Die aktuelle Soll-Geschwindigkeit des Fahrzeugs wird basierend auf fahrzeuginternen Parametern durch die Recheneinrichtung 112 berechnet. der aktuelle erste Differenzwert und der aktuelle zweite Differenzwert werden ebenfalls durch die Recheneinrichtung 112 berechnet. Sowohl der erste als auch der dritte Widerstand wirken gegen ein weiteres Niederdrücken des Beschleunigungspedals. Der erste und der dritte Widerstand werden addiert und gemeinsam durch den Aktor 120 erzeugt. Alternativ könnte der erste Widerstand durch einen ersten Aktor und der dritte Widerstand durch einen zweiten Aktor erzeugt werden.

Beispielsweise kann die Soll-Geschwindigkeit des Fahrzeugs in Abhängigkeit von einem Reifendruck mindestens eines Reifens des Fahrzeugs festgelegt werden; wobei bei einem Reifendruck unter einem vorbestimmten Reifendruck-Schwellwert eine niedrigere Soll-Geschwindigkeit berechnet oder festgesetzt wird als bei einem Reifendruck über dem vorbestimmten Reifendruck-Schwellwert.

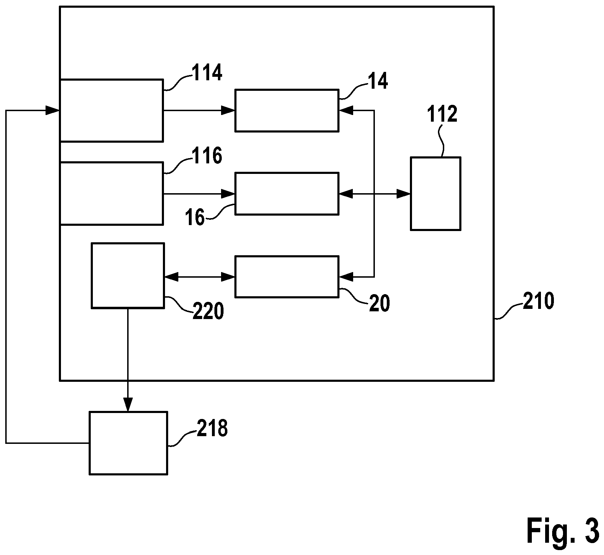

Fig. 3 zeigt ein schematisches Blockschaltbild eines Fahrerassistenz-Systems gemäß einer ersten Ausführungsform der vorliegenden Erfindung. Das System gemäß der ersten Ausführungsform weist ein Lenkrad 218 auf, an welchem ein Aktor 220 zum Erzeugen des ersten Widerstands an dem Lenkrad 218 ausgebildet ist. Der Aktor 220 ist dazu ausgebildet, den ersten Widerstand gegen ein Drehen, also ein Auslenken des Lenkrads 218 nach links oder nach rechts, je nach Maßgabe des Steuersignals, zu erzeugen oder zu erhöhen, wobei der zweite Widerstand gegen ein Drehen in der jeweils entgegengesetzten Richtung jeweils beibehalten oder erniedrigt wird.

Die Steuerregeln des Steuerprogramms sind derart festgelegt, dass ein Überholen eines anderen Fahrzeugs von rechts auf der Autobahn erschwert wird, indem ein Widerstand gegen das Auslenken des Lenkrads 218 des Fahrzeugs nach links durch ein auf das Lenkrad aufgebrachtes Drehmoment nach rechts erzeugt wird, während gegen das Auslenken des Lenkrads 218 nach rechts kein Widerstand erzeugt wird. Die Steuerregeln des Steuerprogramms sind weiterhin derart festgelegt, dass, wenn sich links von dem Fahrzeug eine Gegenfahrbahn befindet und die erfasste Verkehrssituation die Information umfasst, dass aktuell ein Überholverbot gilt, ein Widerstand gegen das Auslenken des Lenkrads 218 des Fahrzeugs nach links erzeugt wird, während gegen das Auslenken des Lenkrads 218 nach rechts kein Widerstand erzeugt wird, wobei diese Steuerregel optional ausgesetzt werden kann, falls sich ein Hindernis in einer aktuellen Fahrspur des Fahrzeugs vor dem Fahrzeug befindet. Die Steuerregeln können auch ganz generell die Funktion eines Spurhalteassistenten nachbilden.

Die Steuerregeln des Steuerprogramms können weiterhin derart festgelegt werden, dass, für den Fall dass ein auf derselben Fahrspur befindlicher Zweiradfahrer, etwa ein Fahrrad- oder Motorradfahrer, überholt werden soll, ein Widerstand gegen ein Auslenken des Lenkrads 218 in Richtung des Zweiradfahrers erzeugt wird, während gegen ein Auslenken des Lenkrads 218 in eine von dem Zweiradfahrer fort weisende Richtung kein Widerstand erzeugt wird.

Die Steuerregeln des Steuerprogramms können weiterhin derart festgelegt werden, dass ein Widerstand gegen ein aktuelles oder aktuell zu erwartendes Auslenken des Lenkrads 218 zur Einfahrt in eine Einbahnstraße oder in eine Autobahnauffahrt gegen die Fahrtrichtung erzeugt wird.

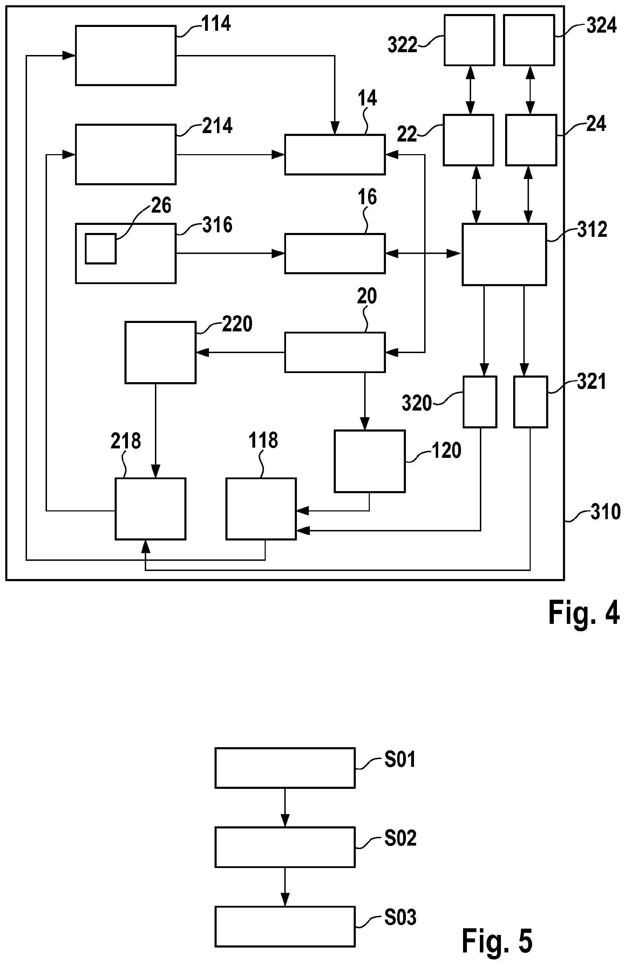

Fig. 4 zeigt ein schematisches Blockschaltbild eines Fahrerassistenz-Systems 310 gemäß einer zweiten Ausführungsform der vorliegenden Erfindung. Das System 310 gemäß der zweiten Ausführungsform umfasst alle Merkmale des zweiten Beispiels und der ersten Ausführungsform und ergänzt diese um weitere Merkmale. Dabei sind die Merkmale der zweiten Ausführungsform zum Teil lediglich beispielshalber gemeinsam dargestellt; für den Fachmann ist ersichtlich, dass auch einige oder alle Merkmale oder Merkmalsgruppen der zweiten Ausführungsform unabhängig von anderen Merkmalen oder Merkmalsgruppen der zweiten Ausführungsform ausgebildet werden können.

Gemäß der zweiten Ausführungsform weist das System 310 zusätzlich einen ersten Kraftrückkopplungsaktor 320 auf, welcher durch das von der Recheneinrichtung 312 erzeugte Steuersignal oder durch ein erstes Zusatz-Steuersignal, welches von der Recheneinrichtung 312 erzeugbar ist, ansteuerbar ist, eine für den Fahrer spürbare Vibration an dem Beschleunigungspedal 118 des Fahrzeugs zu erzeugen. Weiterhin weist das System 310 zusätzlich einen zweiten Kraftrückkopplungsaktor 321 auf, welcher durch das von der Recheneinrichtung 312 erzeugte Steuersignal oder durch ein zweites Zusatz-Steuersignal, welches von der Recheneinrichtung 312 erzeugbar ist, ansteuerbar ist, eine für den Fahrer spürbare Vibration an dem Lenkrad 218 des Fahrzeugs zu erzeugen.

Das System 310 weist eine vierte Schnittstelle 22 zum Anschließen einer Eingabeeinrichtung 322 auf. Gemäß der vierten Ausführungsform ist die Eingabeeinrichtung 322 Teil des Systems 310; dies ist aber nicht zwingend. Mittels der Eingabeeinrichtung 322 ist mindestens eine Untermenge von Steuerregeln aus einer Liste von Steuerregeln des Steuerprogramms durch einen Benutzer auswählbar, wobei die Recheneinrichtung 312 nach dem Auswählen der Untermenge der Steuerregeln das Steuersignal basierend auf der ausgewählten Untermenge der Steuerregeln erzeugt. Beispielsweise kann eine Untermenge mit der Bezeichnung "nur Verkehrsregeln" ausgewählt werden, woraufhin nur Steuerregeln durch die Recheneinrichtung 312 beachtet werden, welche gesetzlichen Verkehrsregeln an einer aktuellen Position des Fahrzeugs entsprechen. Die aktuelle Position des Fahrzeugs kann mittels einer Positionsbestimmungseinrichtung des Fahrzeugs, welche optional auch Teil des Systems 310, insbesondere Teil der Verkehrs-Erfassungseinrichtung 316 sein kann, erfassbar sein, beispielsweise über GPS und/oder über WLAN.

Weiterhin kann zusätzlich, eine Untermenge mit der Bezeichnung "ökonomisches Fahren" ausgewählt werden, wobei die Steuerregeln nicht unbedingt geltenden Verkehrsregeln entsprechen, sondern dazu führen, dass das Steuersignal derart erzeugt wird, dass der erste Widerstand immer dann erzeugt oder erhöht wird, wenn der Fahrer eine Eingabeeinrichtung, insbesondere das Beschleunigungspedal 118, derart bewegt, dass durch die Recheneinrichtung 312 eine Verringerung einer Effizienz berechnet wird, mit welcher das Fahrzeug einen Energievorrat, etwa einen Kraftstofftank oder eine Batterie, in eine Bewegung des Fahrzeugs umsetzt. Es kann vorgesehen sein, dass nur eine solche Verringerung der Effizienz von der Recheneinrichtung 312 beachtet wird, welche über einem vorbestimmten Schwellenwert, z.B. fünf Prozent oder zehn Prozent, liegt.

Das System 310 weist eine fünfte Schnittstelle 24 zum Anschließen einer Ausgabeeinrichtung 324 auf. Gemäß der vierten Ausführungsform ist die Ausgabeeinrichtung 324 Teil des Systems 310; dies ist aber nicht zwingend. Mittels der Ausgabeeinrichtung 324 kann dem Fahrer des Fahrzeugs ein akustisches oder visuelles Warnsignal ausgegeben werden, welches anzeigt, dass aktuell der erste Widerstand erzeugt oder erhöht wird. Die Ausgabeeinrichtung 324 kann beispielsweise ein Display, insbesondere einen Touchscreen oder ein Head-Up-Display, eine LED und/oder einen Ton- oder Geräuschgenerator umfassen oder daraus bestehen.

Die Verkehrs-Erfassungseinrichtung 316 weist eine sechste Schnittstelle 26 zum Anschließen einer Navigationsvorrichtung auf, welche optional auch Teil des Systems 310, insbesondere der Verkehrs-Erfassungseinrichtung 316 sein kann. Über die sechste Schnittstelle 26 kann die Verkehrs-Erfassungseinrichtung 316 von der angeschlossenen Navigationsvorrichtung Datensignale empfangen, welche aktuell gültige Steuerregeln für die Recheneinrichtung 312 umfassen und welche eine durch die Navigationsvorrichtung geplante Route für das Fahrzeug beschreiben. Somit kann durch die Recheneinrichtung 312 das Steuersignal stets so erzeugt werden, dass der erste Widerstand stets dann erzeugt wird, wenn der Fahrer eine Eingabeeinrichtung, insbesondere das Lenkrad 218, derart bewegt, dass durch die Recheneinrichtung 312 eine Abweichung einer darauf basierend zu erwartenden Route des Fahrzeugs von der durch die Navigationsvorrichtung geplanten Route festgestellt wird. Es kann vorgesehen sein, dass der Fahrer, damit die Recheneinrichtung 312 diese Funktionen ausführt, eine mit "vollständige Pfadführung" bezeichnete Untermenge der Steuerregeln auswählen muss.

Sollte der Fahrer zum Folgen der durch die Navigationsvorrichtung, insbesondere auf Wunsch des Fahrers, geplanten Route beispielsweise an einer Kreuzung geradeaus fahren und lenkt der Fahrer das Lenkrad aber nach rechts aus, so wird der erste Widerstand gegen das Bewegen des Lenkrads nach rechts erzeugt. Gleichzeitig kann das akustische, visuelle und/oder haptische Warnsignal ausgegeben werden.

Es kann auch vorgesehen sein, dass der Fahrer über die Eingabeeinrichtung 322 eine beliebige Auswahl der Steuerregeln treffen kann, welche die Recheneinrichtung 312 berücksichtigen soll; beispielsweise nur solche Steuerregeln, welche das Lenkrad 218, aber nicht solche Steuerregeln, welche das Beschleunigungspedal 118 betreffen.

Fig. 5 zeigt ein schematisches Flussdiagramm zum Erläutern eines Verfahrens zum assistierten Führen eines Fahrzeugs gemäß einer dritten Ausführungsform der vorliegenden Erfindung. Das Verfahren gemäß der dritten Ausführungsform ist insbesondere zur Verwendung mit dem erfindungsgemäßen Fahrerassistenz-System, bevorzugt gemäß einer der ersten und zweiten Ausführungsformen geeignet und kann speziell dazu angepasst sein. Insbesondere ist das Verfahren gemäß allen in Bezug auf die erste bis vierte Ausführungsform beschriebenen Varianten und Weiterbildungen des erfindungsgemäßen Systems anpassbar. Für Details zu dem Verfahren wird daher auf die Beschreibung der vorangehenden ersten und zweiten Ausführungsform verwiesen.

In einem Schritt S01 wird eine Bewegung einer Eingabeeinrichtung des Fahrzeugs erfasst. In einem Schritt S02 wird eine Verkehrssituation in einer Umgebung des Fahrzeugs erfasst. In einem Schritt S03 wird ein Aktor 120; 220 basierend auf der erfassten Bewegung der Eingabeeinrichtung 118; 218 und basierend der erfassten Verkehrssituation nach Maßgabe eines Steuerprogramms derart angesteuert, dass durch den Aktor ein erster Widerstand gegen die Bewegung der Eingabeeinrichtung 118; 218 erzeugt oder erhöht wird und ein zweiter Widerstand gegen eine der erfassten Bewegung entgegengesetzte Bewegung beibehalten oder verringert wird, wobei ein Widerstandswert, mit welchem der erste Widerstand erzeugt oder auf den der erste Widerstand erhöht wird, in Abhängigkeit von der erfassten Verkehrssituation eingestellt wird.

## Patentansprüche

1. Fahrerassistenz-System (210; 310) für ein Fahrzeug mit:
einer Recheneinrichtung (112; 312);
einer ersten Schnittstelle (14) zum Anschließen mindestens einer Eingabe-Erfassungseinrichtung (214) des Fahrzeugs an die Recheneinrichtung (112; 312);
einer zweiten Schnittstelle (16) zum Anschließen einer Verkehrs-Erfassungseinrichtung (116) des Fahrzeugs an die Recheneinrichtung (112; 312);
einer dritten Schnittstelle (20) zum Anschließen mindestens eines Aktors (220) an die Recheneinrichtung (112; 312);
wobei die Recheneinrichtung (12; 112; 312) dazu ausgebildet ist, basierend auf einer von der mindestens einen Eingabe-Erfassungseinrichtung (114; 214) erfassten Bewegung eines Lenkrads (218) des Fahrzeugs und basierend auf einer von der Verkehrs-Erfassungseinrichtung (16) erfassten Verkehrssituation nach Maßgabe eines Steuerprogramms der Recheneinrichtung (12; 112; 312) ein Steuersignal zu erzeugen und an die dritte Schnittstelle (20) zu übermitteln; und
mindestens einem an der dritten Schnittstelle (20) angeschlossenen Aktor (220), mittels dessen basierend auf dem erzeugten Steuersignal ein erster Widerstand gegen die Bewegung des Lenkrads (218) erzeugbar oder erhöhbar ist;
wobei das Steuerprogramm Steuerregeln umfasst, welche einer, mehreren oder allen an einer aktuellen Position des Fahrzeugs geltenden gesetzlichen Verkehrsregeln entsprechen;
wobei das Steuersignal dazu ausgebildet ist, den mindestens einen Aktor (220) anzusteuern (220), einen ersten Widerstand gegen die erfasste Bewegung des Lenkrads (218) zu erzeugen oder zu erhöhen und einen zweiten Widerstand gegen eine der erfassten Bewegung entgegengesetzte Bewegung beizubehalten oder zu verringern;
wobei die Recheneinrichtung (112; 312) dazu ausgebildet ist, einen Widerstandswert, mit welchem der erste Widerstand erzeugt oder auf welchen der erste Widerstand erhöht wird, in Abhängigkeit von der erfassten Verkehrssituation einzustellen;
wobei mittels des Aktors (220) ein Drehmoment erzeugbar ist, welches einem Drehen des Lenkrads (218) in mindestens eine Richtung entgegen wirkt, wobei der Widerstandswert, mit welchem der erste Widerstand erzeugt oder auf den der erste Widerstand erhöht wird, proportional zu einer Abweichung einer aktuellen Auslenkung des Lenkrads (218) aus einer nach Maßgabe des Steuerprogramms basierend auf der erfassten Verkehrssituation berechneten Soll-Auslenkung des Lenkrads (218) ist;
wobei die Recheneinrichtung (112; 312) dazu ausgebildet ist, das Steuersignal zumindest dann zu erzeugen, wenn durch die Recheneinrichtung (112; 312), basierend auf der erfassten Verkehrssituation festgestellt wird, dass aufgrund der erfassten Bewegung des Lenkrads (218) ein Bruch einer der in dem Steuerprogramm gespeicherten Steuerregeln bevorsteht oder erfolgt.

2. System (210; 310) nach Anspruch 1 mit:
mindestens einer an der ersten Schnittstelle (14) angeschlossenen Eingabe-Erfassungseinrichtung (214), mittels welcher eine Bewegung des Lenkrads (218) des Fahrzeugs erfassbar ist; und
einer an der zweiten Schnittstelle (16) angeschlossenen Verkehrs-Erfassungseinrichtung (116; 316), mittels welcher eine Verkehrssituation in einer Umgebung des Fahrzeugs erfassbar ist.

3. System (310) nach Anspruch 2,
wobei mindestens einer der angeschlossenen Aktoren (120) derart ausgebildet ist, dass der mittels des Aktors (120) erzeugbare oder erhöhbare erste Widerstand einem Niederdrücken eines Beschleunigungspedals (118) des Fahrzeugs als einer weiteren Eingabeeinrichtung entgegen wirkt.

4. System (310) nach Anspruch 3,
wobei mittels der Verkehrs-Erfassungseinrichtung (116; 316) eine aktuelle Geschwindigkeitsbegrenzung für das Fahrzeug erfassbar ist; und
die Recheneinrichtung (112; 312) dazu ausgebildet ist, das Steuersignal derart zu erzeugen, dass der erste Widerstand erzeugt oder erhöht wird, wenn eine aktuelle Geschwindigkeit des Fahrzeugs die aktuelle Geschwindigkeitsbegrenzung überschreitet.

5. System (310) nach Anspruch 4, wobei die Recheneinrichtung (112; 312) dazu ausgebildet ist, das Steuersignal derart zu erzeugen, dass der Widerstandswert, mit dem der erste Widerstand erzeugt oder auf den der erste Widerstand erhöht wird, proportional zu einem aktuellen Differenzwert ist, um welchen die aktuelle Geschwindigkeit des Fahrzeugs die aktuelle Geschwindigkeitsbegrenzung für das Fahrzeug überschreitet.

6. System nach einem der Ansprüche 1 bis 5 mit:
einem Kraftrückkopplungsaktor (320; 321), welcher mittels des erzeugten Steuersignals zum Ausgeben eines haptischen Signals an dem Lenkrad (218) ansteuerbar ist.

7. Verfahren zum assistierten Führen eines Fahrzeugs mit den Schritten:
Erfassen (S01) einer Bewegung eines Lenkrads (218) des Fahrzeugs;
Erfassen (S02) einer Verkehrssituation in einer Umgebung des Fahrzeugs;
Ansteuern (S03) eines Aktors (220) basierend auf der erfassten Bewegung des Lenkrads (218) und basierend auf der erfassten Verkehrssituation nach Maßgabe eines Steuerprogramms derart, dass ein erster Widerstand gegen die Bewegung des Lenkrads (218) erzeugt oder erhöht wird und ein zweiter Widerstand gegen eine der erfassten Bewegung entgegengesetzte Bewegung beibehalten oder verringert wird;
wobei das Steuerprogramm Steuerregeln umfasst, welche einer, mehreren oder allen an einer aktuellen Position des Fahrzeugs geltenden gesetzlichen Verkehrsregeln entsprechen;
wobei ein Widerstandswert, mit welchem der erste Widerstand erzeugt oder auf den der erste Widerstand erhöht wird, in Abhängigkeit von der erfassten Verkehrssituation eingestellt wird; und
wobei mittels des Aktors (220) ein Drehmoment erzeugt wird, welches einem Drehen des Lenkrads (218) in mindestens eine Richtung entgegen wirkt, wobei der Widerstandswert, mit welchem der erste Widerstand erzeugt oder auf den der erste Widerstand erhöht wird, proportional zu einer Abweichung einer aktuellen Auslenkung des Lenkrads (218) aus einer nach Maßgabe des Steuerprogramms basierend auf der erfassten Verkehrssituation berechneten Soll-Auslenkung des Lenkrads (218) ist; und
wobei das Ansteuern (S03) des Aktors (220) zumindest dann erfolgt, wenn basierend auf der erfassten Verkehrssituation festgestellt wird, dass aufgrund der erfassten Bewegung des Lenkrads (218) ein Bruch einer der in dem Steuerprogramm gespeicherten Steuerregeln bevorsteht oder erfolgt.

## Claims

1. Driver assistance system (210; 310) for a vehicle, having:
a computing device (112; 312);
a first interface (14) for connecting at least one input capture device (214) of the vehicle to the computing device (112; 312);
a second interface (16) for connecting a traffic capture device (116) of the vehicle to the computing device (112; 312) ;
a third interface (20) for connecting at least one actuator (220) to the computing device (112; 312);
wherein the computing device (12; 112; 312) is designed to generate a control signal on the basis of a movement of a steering wheel (218) of the vehicle, as captured by the at least one input capture device (114; 214), and on the basis of a traffic situation captured by the traffic capture device (16) in accordance with a control program of the computing device (12; 112; 312) and to transmit said control signal to the third interface (20); and
at least one actuator (220) which is connected to the third interface (20) and can be used to generate or increase a first resistance to the movement of the steering wheel (218) on the basis of the generated control signal;
wherein the control program comprises control rules which correspond to one, more or all legal traffic rules applicable at a current position of the vehicle;
wherein the control signal is designed to control the at least one actuator (220) to generate or increase a first resistance to the captured movement of the steering wheel (218) and to retain or reduce a second resistance to a movement opposite the captured movement;
wherein the computing device (112; 312) is designed to set a resistance value, with which the first resistance is generated or to which the first resistance is increased, on the basis of the captured traffic situation;
wherein the actuator (220) can be used to generate a torque which counteracts turning of the steering wheel (218) in at least one direction, wherein the resistance value, with which the first resistance is generated or to which the first resistance is increased, is proportional to a deviation of a current deflection of the steering wheel (218) from a desired deflection of the steering wheel (218), as calculated in accordance with the control program on the basis of the captured traffic situation;
wherein the computing device (112; 312) is designed to generate the control signal at least when the computing device (112; 312) determines, on the basis of the captured traffic situation, that a breach of one of the control rules stored in the control program is imminent or is effected on the basis of the captured movement of the steering wheel (218).

2. System (210; 310) according to Claim 1, having:
at least one input capture device (214) which is connected to the first interface (14) and can be used to capture a movement of the steering wheel (218) of the vehicle; and
a traffic capture device (116; 316) which is connected to the second interface (16) and can be used to capture a traffic situation in an environment of the vehicle.

3. System (310) according to Claim 2,
wherein at least one of the connected actuators (120) is designed in such a manner that the first resistance which can be generated or increased by means of the actuator (120) counteracts depressing of an acceleration pedal (118) of the vehicle as a further input device.

4. System (310) according to Claim 3,
wherein the traffic capture device (116; 316) can be used to capture a current speed limit for the vehicle; and
the computing device (112; 312) is designed to generate the control signal in such a manner that the first resistance is generated or increased if a current speed of the vehicle exceeds the current speed limit.

5. System (310) according to Claim 4, wherein the computing device (112; 312) is designed to generate the control signal in such a manner that the resistance value, with which the first resistance is generated or to which the first resistance is increased, is proportional to a current difference value by which the current speed of the vehicle exceeds the current speed limit for the vehicle.

6. System according to one of Claims 1 to 5, having:
a force feedback actuator (320; 321) which can be controlled, by means of the generated control signal, to output a haptic signal at the steering wheel (218).

7. Method for the assisted driving of a vehicle, having the steps of:
capturing (S01) a movement of a steering wheel (218) of the vehicle;
capturing (S02) a traffic situation in an environment of the vehicle;
controlling (S03) an actuator (220) on the basis of the captured movement of the steering wheel (218) and on the basis of the captured traffic situation in accordance with a control program in such a manner that a first resistance to the movement of the steering wheel (218) is generated or increased and a second resistance to a movement opposite the captured movement is retained or reduced;
wherein the control program comprises control rules which correspond to one, more or all legal traffic rules applicable at a current position of the vehicle;
wherein a resistance value, with which the first resistance is generated or to which the first resistance is increased, is set on the basis of the captured traffic situation; and
wherein the actuator (220) is used to generate a torque which counteracts turning of the steering wheel (218) in at least one direction, wherein the resistance value, with which the first resistance is generated or to which the first resistance is increased, is proportional to a deviation of a current deflection of the steering wheel (218) from a desired deflection of the steering wheel (218), as calculated in accordance with the control program on the basis of the captured traffic situation; and
wherein the actuator (220) is controlled (S03) at least when it is determined, on the basis of the captured traffic situation, that a breach of one of the control rules stored in the control program is imminent or is effected on the basis of the captured movement of the steering wheel (218).

## Revendications

1. Système d'assistance à la conduite (210 ; 310) pour un véhicule comportant :
un dispositif de calcul (112 ; 312) ;
une première interface (14) destinée à connecter au moins un dispositif de détection d'entrée (214) du véhicule au dispositif de calcul (112 ; 312) ;
une deuxième interface (16) destinée à connecter un dispositif de détection de circulation (116) du véhicule au dispositif de calcul (112 ; 312) ;
une troisième interface (20) destinée à connecter au moins un actionneur (220) au dispositif de calcul (112 ; 312) ;
dans lequel le dispositif de calcul (12 ; 112 ; 312) est conçu pour générer un signal de commande sur la base d'un mouvement d'un volant de direction (218) du véhicule, détecté par ledit au moins un dispositif de détection d'entrée (114 ; 214) et sur la base d'une situation de circulation détectée par le dispositif de détection de circulation (16) conformément à un programme de commande du dispositif de calcul (12 ; 112 ; 312), et pour le transmettre à la troisième interface (20) ; et
au moins un actionneur (220) connecté à la troisième interface (20), au moyen duquel une première résistance au mouvement du volant de direction (218) peut être générée ou augmentée sur la base du signal de commande généré ;
dans lequel le programme de commande comprend des règles de commande qui correspondent à l'une, à plusieurs ou à la totalité des règles de circulation légales applicables à une position actuelle du véhicule ;
dans lequel le signal de commande est conçu pour commander (220) ledit au moins un actionneur (220), pour générer ou augmenter une première résistance au mouvement détecté du volant de direction (218), et pour maintenir ou réduire une deuxième résistance à un mouvement opposé au mouvement détecté ;
dans lequel le dispositif de calcul (112 ; 312) est conçu pour régler une valeur de résistance avec laquelle est générée la première résistance ou à laquelle est portée la première résistance, en fonction de la situation de circulation détectée ;
dans lequel l'actionneur (220) permet de générer un couple qui agit contre une rotation du volant de direction (218) dans au moins une direction, dans lequel la valeur de résistance avec laquelle est générée la première résistance ou à laquelle est portée la première résistance est proportionnelle à un écart d'un braquage actuel du volant de direction (218) par rapport à un braquage théorique du volant de direction (218) calculé conformément au programme de commande sur la base de la situation de circulation détectée ;
dans lequel le dispositif de calcul (112 ; 312) est conçu pour générer le signal de commande au moins lorsqu'il est déterminé par le dispositif de calcul (112 ; 312), sur la base de la situation de circulation détectée, qu'en raison du mouvement détecté du volant de direction (218), un non-respect de l'une des règles de commande stockées dans le programme de commande est imminent ou se produit.

2. Système (210 ; 310) selon la revendication 1, comportant :
au moins un dispositif de détection d'entrée (214) connecté à la première interface (14), au moyen duquel un mouvement du volant de direction (218) du véhicule peut être détecté ; et
un dispositif de détection de circulation (116 ; 316) connecté à la deuxième interface (16), au moyen duquel une situation de circulation peut être détectée dans un environnement du véhicule.

3. Système (310) selon la revendication 2,
dans lequel au moins l'un des actionneurs connectés (120) est conçu de manière à ce que la première résistance, qui peut être générée ou augmentée au moyen de l'actionneur (120), s'oppose à un appui sur une pédale d'accélération (118) du véhicule en tant qu'autre dispositif d'entrée.

4. Système (310) selon la revendication 3,
dans lequel une limite de vitesse actuelle peut être détectée pour le véhicule au moyen du dispositif de détection de circulation (116 ; 316) ; et
le dispositif de calcul (112 ; 312) est conçu pour générer le signal de commande de manière à ce que la première résistance soit générée ou augmentée lorsqu'une vitesse actuelle du véhicule dépasse la limite de vitesse actuelle.

5. Système (310) selon la revendication 4,
dans lequel le dispositif de calcul (112 ; 312) est conçu pour générer le signal de commande de manière à ce que la valeur de résistance avec laquelle est générée la première résistance ou à laquelle est portée la première résistance soit proportionnelle à une valeur de différence actuelle, la vitesse actuelle du véhicule dépassant la limite de vitesse actuelle pour le véhicule de cette valeur.

6. Système selon l'une des revendications 1 à 5, comportant :
un actionneur à retour de force (320 ; 321) qui peut être commandé au moyen du signal de commande généré afin de délivrer un signal haptique au volant de direction (218).

7. Procédé d'assistance à la conduite d'un véhicule comprenant les étapes consistant à :
détecter (S01) un mouvement d'un volant de direction (218) du véhicule ;
détecter (S02) une situation de circulation dans un environnement du véhicule ;
commander (S03) un actionneur (220) sur la base du mouvement détecté du volant de direction (218) et sur la base de la situation de circulation détectée, conformément à un programme de commande de manière à générer ou augmenter une première résistance au mouvement du volant de direction (218), et pour maintenir ou réduire une deuxième résistance à un mouvement opposé au mouvement détecté ;
dans lequel le programme de commande comprend des règles de commande qui correspondent à l'une, à plusieurs ou à la totalité des règles de circulation légales applicables à une position actuelle du véhicule ;
dans lequel une valeur de résistance avec laquelle est générée la première résistance ou à laquelle est portée la première résistance est réglée en fonction de la situation de circulation détectée ; et
dans lequel l'actionneur (220) permet de générer un couple qui agit contre une rotation du volant de direction (218) dans au moins une direction, dans lequel la valeur de résistance avec laquelle est générée la première résistance ou à laquelle est portée la première résistance est proportionnelle à un écart d'un braquage actuel du volant de direction (218) par rapport à un braquage théorique du volant de direction (218) calculé conformément au programme de commande sur la base de la situation de circulation détectée ; et
dans lequel la commande (S03) de l'actionneur (220) est effectuée au moins lorsqu'il est déterminé, sur la base de la situation de circulation détectée, qu'en raison du mouvement détecté du volant de direction (218), un non-respect de l'une des règles de commande stockées dans le programme de commande est imminent ou se produit.
